# EUROPEAN PATENT APPLICATION

(11) **EP 4 574 374 A1**
(43) Date of publication of application: **25.06.2025**
(21) Application number: 23219196.5
(22) Date of filing: 21.12.2023
(51) Int. Cl.: B29B 7/90, B01J 19/10, B29B 7/46, B29C 48/14

(54) **ULTRASONIC DISPERSION**

(71) Applicant: Trifilon AB, 611 45 Nyköping (SE)
(72) Inventor: LIDSTRAND, Martin, 611 67 Nyköping (SE); SIRIAH, Hardik, 141 52 Huddinge (SE)
(74) Representative: Bergenstråhle & Partners AB

(57) **Abstract**

A method for dispersing organic particles in a polymer material, the method being part of a process for producing a composite material. The method comprises receiving the organic particles and the polymer material in a compounding extruder, and exposing the organic particles and the polymer material in the compounding extruder to ultrasonic radiation to disperse the organic particles in the polymer material.

## Description

### Technical field

The present invention relates generally to compounding in compounding extruders. Specifically, to compounding of biocomposites.

### Background art

Today, compound extrusion is the common approach to mixing polymers and additives within the plastic industry. A compounding extruder has the purpose of mixing two or more material components together to form a composite material, also referred to as a compound. The material components are mixed into a compound through mechanical kneading by means of one or more compounding screws in the compounding extruder. The material components are entered on one end of the compounding extruder and flows through the extruder by means of the screw/screws where they melt and mix, exiting the machine at the other end as a mixed compound.

The compounding process may be divided in to two types of mixing, a distributive mixing followed by a dispersive mixing. Generally described, distributive mixing relates to spatial distribution of the components through the major phase, that is, the polymer phase. Dispersive mixing relates to homogenizing the compound, which sometimes involves breaking up agglomerated components and even breaking up components into smaller pieces. Both types of mixing take place in the compounding extruder and are known to the skilled person. As the material moves through the compounding extruder, it undergoes several processing stages in order to form the compound. The initial stages comprise melting of the polymer, and distributive mixing. The later stages comprise degassing, dehumidification and dispersive mixing.

In recent years, organic materials have gained increased focus in the plastic industry, partly attributed to a low carbon footprint, for example organic composite materials comprising a polymer and an organic particle as a reinforcing component or for providing other advantageous properties. Biocomposites is one example of a new class of sustainable organic materials. Biocomposites are composite materials having organic fibers, also known as natural fibers, as a reinforcing component. The structure of organic fibers differs vastly from common reinforcing materials used in the plastic industry today, for example inorganic powders, particles, or fibers, such as nano fibers.

However, in compounding extrusion, the mechanical loads which the material is subjected to as it is being mixed, may negatively affect the reinforcing components and thus the properties of the end product. Damage may be caused for example by heat, by compression, or shear loads. The levels of heat, compression and shear in available compounding methods today are not suitable for organic materials, and result in loss of property in the resulting compound. For an organic fiber as an example, loss of property may for example be related to breaking of the organic fiber, that is, the length of the fiber decreasing during compounding.

Furthermore, there is a lack of methods and equipment capable of achieving a sufficiently homogenous compound, that is, sufficiently dispersing the organic material in the polymer matrix. Dispersing organic material in a polymer material is not trivial and has long been a problem in the industry. The affinity between the two materials is low, which is attributed to the different polarity between them. Furthermore, organic particles forming hydroxide (OH) bonds between each other which are difficult to break up, which easily causes agglomeration of the organic material.

As such, there is a need for new processes for the manufacturing of organic composite materials such as biocomposites, and for achieving a sufficient dispersion of organic materials in a polymer matrix.

### Summary of invention

An object of the present invention is to overcome at least some of the problems outlined above. It is possible to achieve this object and possibly others by a method for dispersing organic fibers as defined in the attached independent claim.

According to a first aspect, there is provided a method for dispersing organic particles in a polymer material. The method is part of a process for producing a composite material. The method comprises receiving the organic particles and the polymer material in a compounding extruder, exposing the organic particles and the polymer material in the compounding extruder to ultrasonic radiation to disperse the organic particles in the polymer material.

The properties of organic particles put high demands on the processing of compounds comprising such particles, since the organic particles are easily damaged and may lose their mechanical properties if exposed to excessive force during the mechanical kneading in the compounding extruder. Mixing using ultrasonic radiation provides that the organic particles may be dispersed in a less damaging way, such that the beneficial properties of the organic particles are maintained.

The dispersion, that is, mixing and homogenization, occurs by disintegrating agglomerated particles into individualized particles. Thereby, the organic particles are mixed with the polymer material into a homogeneous mass. Without being bound by theory, ultrasonication works by subjecting the molten polymer to ultrasonic radiation which creates pressure in several microscopic regions of the molten polymer, giving rise to a phenomenon called acoustic cavitation. This special type of cavitation phenomenon can only be created when high intensity sound waves are applied in the molten polymer. The acoustic cavitation induces bubble formation in the molten polymer. After reaching a threshold limit (depending on material characteristics), the bubble implodes. In the context of the present disclosure, the implosion of bubbles in the molten polymer gives rise to dispersive mixing in the molten polymer.

One additional advantage of using organic particles is that the organic particle source is good at sequestering carbon, and utilizing it will as such be an important tool in reaching global emissions targets.

In one exemplary embodiment, the organic particle is a synthesized (man-made) particle.

In one exemplary embodiment, the organic particle is an organic fiber.

The dispersion thus occurs by disintegrating agglomerated fibers, sometimes known as a fiber bundle, into individualized fibers, sometime known as elementary fibers. The organic fibers are easily damaged and may lose their mechanical properties if exposed to excessive force during the mechanical kneading in the compounding extruder. Especially, the organic fiber may break into smaller parts, thus decreasing the reinforcing ability which is desired in a biocomposite. Furthermore, the organic fiber is prone to agglomeration due to strong OH-bonds between the fibers. Mechanical kneading may in fact have a negative effect as it may push the fibers together, increasing the number of bonds. Mixing using ultrasonic radiation provides that the organic fibers may be dispersed in a less damaging way, such that the beneficial properties of the organic particles are maintained.

In one exemplary embodiment, the ultrasonic radiation has a frequency within the interval 20-200000 kHz.

In one exemplary embodiment, the ultrasonic radiation has a frequency within the interval 20-100 kHz.

In one exemplary embodiment, the ultrasonic radiation has a frequency within the interval 20-40 kHz.

In one exemplary embodiment, the ultrasonic radiation has an amplitude in the interval 0.1-200 µm.

In one exemplary embodiment, the temperature of the organic particles and polymer material during exposure to ultrasonic radiation is ≤ 400° C.

In one exemplary embodiment, the temperature of the organic particles and polymer material during exposure to ultrasonic radiation is ≤ 250° C.

In one exemplary embodiment, the temperature of the organic particles and polymer material during exposure to ultrasonic radiation is ≤ 200° C.

In one exemplary embodiment, the temperature of the organic particles and polymer material during exposure to ultrasonic radiation is above a melting temperature of the polymer. In one exemplary embodiment, the temperature is 0-50° C above the melting temperature of the polymer.

In one exemplary embodiment, the temperature of the organic particles and polymer material during exposure to ultrasonic radiation is below a temperature corresponding to a burning point of the organic particle.

Having a high enough temperature of the polymer such that it is fully molten, and a low enough temperature of the organic particle such that it is below the burning point, provides wetting between the components such that they may be mixed. Typically, a synthesized organic particle has a higher burning point than an organic particle from a natural source such as forestry or an agricultural source.

Maintaining the beneficial properties of organic particles puts high demands on the processing of the compound. The organic particles may be damaged and lose their mechanical properties at normal processing temperatures in compounding extruders. Specifically, the burning point of the organic particle cannot be exceeded. When reference is made to the temperature of the organic particles and the polymer material during exposure to ultrasonic radiation, this may be understood as the temperature in the barrel at the position of exposure to ultrasonic radiation.

Furthermore, to achieve sufficient dispersion by means of the ultrasonic radiation, the material needs to be exposed to a sufficient amount of energy. However, if the material is exposed to too much energy from the ultrasonic radiation, the organic particles may be damaged. As such, it is important to control process parameters such as frequency, amplitude and temperature.

In one exemplary embodiment, an average fiber length of the organic fibers is 5-8000 microns, preferably 50-2000 microns.

In one exemplary embodiment, an average fiber diameter of the organic fibers is ≥ 10 microns.

In one exemplary embodiment, the ultrasonic radiation is emitted from an ultrasonic arrangement comprising an ultrasonic horn having at least one concave recess.

In one exemplary embodiment, the ultrasonic horn comprises a flat tip defining an ultrasound emitting tip, the flat tip having an essentially rectangular surface.

In one exemplary embodiment, the ultrasonic horn has the shape of a rectangular cuboid comprising two concave recesses joined by a flat tip defining an ultrasound emitting tip, the flat tip having an essentially rectangular surface.

In one exemplary embodiment, the ultrasonic horn has a cylindrical shape. In one exemplary embodiment, the ultrasonic horn comprises a flat bottom surface defining an ultrasound emitting tip, the flat bottom surface having an essentially circular shape. In one exemplary embodiment, the cylindrical ultrasonic horn has a varying diameter.

In one exemplary embodiment, the compounding extruder comprises a barrel section, wherein the ultrasonic arrangement is arranged horizontally, directed in a horizontal direction towards, and extending through, a lateral side of the barrel section.

In one exemplary embodiment, the ultrasonic arrangement is sealed in place such that no outside air is in contact with the compound in the barrel. This is to prevent the material from reacting with air during exposure to ultrasonic radiation.

In one exemplary embodiment, the compounding extruder comprises a barrel section comprising two ultrasonic arrangements, directed at the barrel section from different directions.

In one exemplary embodiment, the compounding extruder comprises a barrel section comprising two ultrasonic arrangements, arranged in different positions relative to a circumference of the barrel section.

In one exemplary embodiment, the compounding extruder comprises a barrel section comprising two ultrasonic arrangements, arranged in different positions relative to a lengthwise extension of the barrel section.

In one exemplary embodiment, the compounding extruder comprises a barrel section comprising more than two ultrasonic arrangements.

In one exemplary embodiment, the compounding extruder is arranged to receive a twin compounding screw.

According to a second aspect of the disclosure, there is provided a barrel section, arranged as a part of a barrel of a compounding extruder, the barrel section comprising an aperture in a mantle surface thereof, wherein the barrel section comprises an ultrasonic arrangement comprising an ultrasonic transducer, and means for arranging the ultrasonic transducer on the barrel section such that an ultrasonic horn of the ultrasonic arrangement extends through the aperture.

In one exemplary embodiment, a shape of an output end of the ultrasonic horn comprises at least one concave recess.

In one exemplary embodiment, the ultrasonic horn comprises a flat tip defining an ultrasound emitting tip, the flat tip having an essentially rectangular surface.

In one exemplary embodiment, the ultrasonic horn has the shape of a rectangular cuboid comprising two concave recesses joined by a flat tip defining an ultrasound emitting tip, the flat tip having an essentially rectangular surface.

In one exemplary embodiment, the ultrasonic horn has a cylindrical shape. In this embodiment, the ultrasonic horn comprises a flat bottom surface defining an ultrasound emitting tip, the flat bottom surface having an essentially circular shape. In one exemplary embodiment, the cylindrical ultrasonic horn has a varying diameter.

In one exemplary embodiment, the barrel section comprises means for cooling the ultrasonic horn.

In one exemplary embodiment, the ultrasonic arrangement is arranged horizontally, directed in a horizontal direction towards, and extending through, a lateral side of the barrel.

In one exemplary embodiment, the barrel section comprises two ultrasonic arrangements, directed at the barrel section from different directions.

In one exemplary embodiment, the barrel section comprises two ultrasonic arrangements, arranged in different positions relative to a circumference of the barrel section.

In one exemplary embodiment, the barrel section comprises two ultrasonic arrangements, arranged in different positions relative to a lengthwise extension of the barrel section.

In one exemplary embodiment, the barrel section comprises two ultrasonic arrangements and wherein the respective ultrasonic horns of the ultrasonic transducers are arranged at a distance of 1-100 mm from each other.

In one exemplary embodiment, the barrel section comprises more than two ultrasonic arrangements.

In one exemplary embodiment, the barrel section is arranged to receive a twin compounding screw.

In the context of the present disclosure, a difference between using a single compounding screw and a twin compounding screw is the position of the so called "reactive zone". The reactive zone is herein defined as the area in the barrel where the ultrasonic radiation is the most intense, which could be seen as the focus point of the ultrasonic radiation. When the compounding screw is a twin compounding screw, the reactive zone is between the two parallel compounding screws. Between the two compounding screws is also where the main mechanical kneading takes place. Naturally, mechanical kneading also takes place between each of the compounding screws and the inner wall of the barrel. As such, utilizing a twin compounding screw has the advantage that the ultrasonic radiation is the most intense in the same position as the main mechanical kneading takes place, which additionally improves the distributive mixing.

According to a third aspect of the disclosure, there is provided a compounding extruder comprising a barrel, a compounding screw, an inlet for a polymer material, an inlet for organic particles, and an outlet for a composite material comprising the organic particles dispersed in the polymer material, wherein the barrel comprises a barrel section according to the second aspect.

In one exemplary embodiment, the compounding screw is a twin compounding screw.

In one exemplary embodiment, the barrel section is not an end section of the barrel.

At the end of the barrel, the function of the compounding screw is only to feed the compound into a die for shaping the compound. Mixing is considered complete before this point. As such, the ultrasonic arrangement is preferably arranged before an end section of the barrel.

In one exemplary embodiment, the ultrasonic arrangement is arranged at a position corresponding to where dispersive mixing takes place in the barrel.

### Brief description of drawings

The invention is now described, by way of example, with reference to the accompanying drawings, in which:
Fig. 1 displays a compounding extruder according to the disclosure.
Fig. 2 displays a barrel section according to the disclosure.
Fig. 3 displays part of an ultrasonic arrangement according to the disclosure.
Fig. 4 displays a longitudinal section of a compounding extruder according to the disclosure.
Fig. 5 displays a longitudinal section of a compounding extruder according to the disclosure.
Figs. 6a and 6b displays a cross-section and an exploded view, respectively, of a barrel section according to the disclosure.

### Description of embodiments

In the following, a detailed description of a method, a barrel section and a compounding extruder will be described. In the figures, like reference numerals designate identical or corresponding elements throughout the figures. It will be appreciated that these figures are for illustration only and do not in any way restrict the scope of the present disclosure.

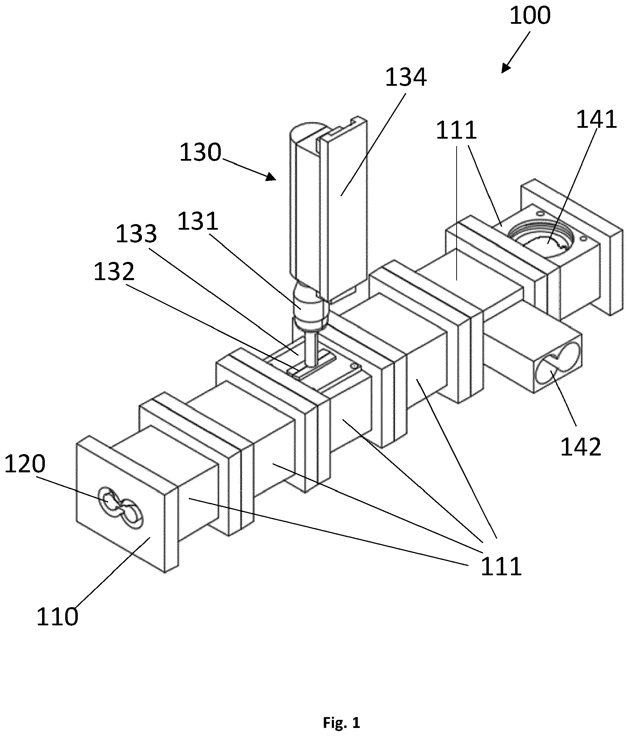

Figs. 1-3 show a first embodiment of a compounding extruder 100 according to the invention. The compounding extruder 100 is arranged to mix at least two materials together to form a compound. The present disclosure is related to mixing a polymer, which constitutes the matrix phase of the compound, and an organic particle.

The polymer may be, but is not limited to, resins such as starch-based aliphatic polyesters, polylactic acid (PLA), polyethylene (PE), polypropylene, polyacetal, acrylic, nylon (polyamides), polystyrene, polyvinyl chloride (PVC), acrylonitrile butadiene styrene (ABS), polycarbonate, or combinations thereof.

The organic particle is a particle derived from a natural source, such as a plant. The organic particle may for example be essentially spherical. One spherical organic particle is for example an organic pigment.

The organic particle may be an organic fiber, such as a reinforcing organic fiber. The organic fiber may be, but is not limited to, agriculturally sourced fiber, hemp fiber, cellulose fiber, or combinations thereof.

The compounding extruder 100 generally comprises a barrel 110 in which material is inputted at a first end and outputted through an opposite, second end, a compounding screw 120 arranged in a bore of the barrel 110, and at least one ultrasonic arrangement 130.

The compounding extruder 100 may also comprise equipment know by the skilled person such as related to pressure (degassing), moisture level (dehumidification), temperature (heating/cooling).

According to Fig. 1, the compounding extruder 100 is arranged with two material inlets at the first end. A first material inlet 141 is arranged on an upper side of the barrel 110. As such, material is fed through the first material inlet 141 into the bore in a vertical direction. In one example, the first material inlet 141 is arranged to receive a polymer material. A second material inlet 142 is arranged on a lateral side of the barrel 110. As such, material is fed through the second material inlet 142 into the bore in a horizontal direction. At least one feeding screw (not shown) may be arranged in the second material inlet 142 to feed the material into the bore. In one example, the second material inlet 142 is arranged to receive a particle material, preferably an organic particle.

At the second end of the compounding extruder 100, in connection to an outlet of the bore, a die equipment is commonly connected (not shown). The die equipment may be for forming a composite product, such as biocomposite pellets to be used is a subsequent molding process. Such die equipment is known to the skilled person and will not be discussed further herein.

According to Fig. 1, the barrel 110 of the compounding extruder 100 comprises a plurality of barrel sections 111 which, when connected, form the barrel 110. The bore is arranged to receive the compounding screw 120. In Fig. 1, the compounding screw 120 is a twin screw, which comprises two parallel, corotating compounding screws. The bore in Fig. 1 is thus arranged to receive the twin screw. To this end, the cross-sectional shape of the bore is adapted for receiving the twin screw. In Fig. 1, the cross-section of the bore has the shape of two overlapping circles and, as such, the bore has the shape of two overlapping cylinders. In an alternative embodiment, the bore is cylindrical, and arranged to receive a single compounding screw. In an alternative embodiment, the bore is cylindrical and large enough to receive a twin screw. The compounding screw 120 causes the material to flow from the first end of the barrel 110 to the second end of the barrel 110. As such, the design of the bore is adapted such that there is a distance between an inner wall of the bore, and the compounding screw 120, to achieve a sufficient flow of material and mechanical kneading of the material which is known to the skilled person. Furthermore, when a twin screw is utilized, there is a distance between the two compounding screws to achieve a sufficient flow of material and mechanical kneading of the material therebetween which is known to the skilled person. In an alternative embodiment the compounding screw 120 comprises more than two compounding screws.

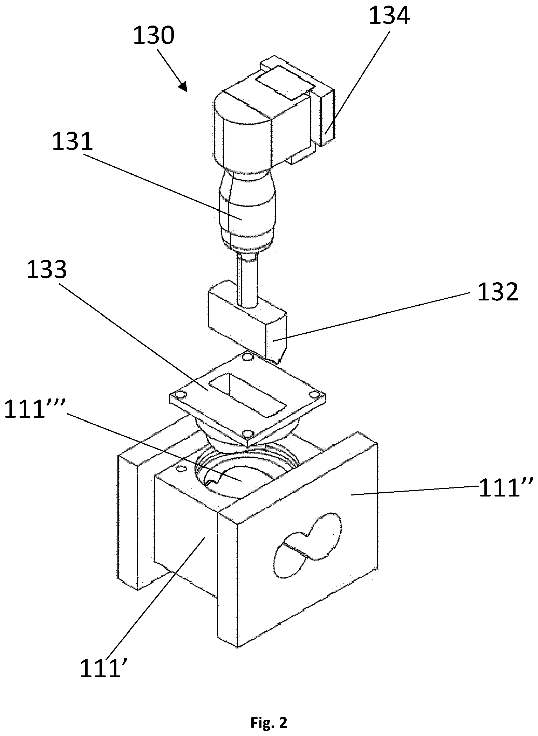

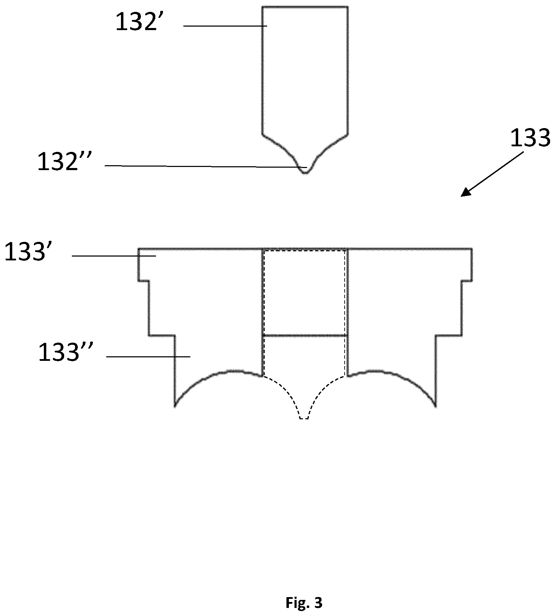

The ultrasonic arrangement 130 according to the present disclosure generally comprises an ultrasonic transducer 131, an ultrasonic horn 132 and a mounting means 133 for mounting the ultrasonic horn 132 in the barrel 110 of the compounding extruder 100. These components will be described more in detail with reference to Fig. 2 and Fig. 3.

According to Fig. 1, the ultrasonic arrangement 130 further comprises connecting means 134 for connecting the ultrasonic arrangement 130 to an existing structure, to keep the ultrasonic arrangement 130 steady during use. In Fig. 1, the connecting means 134 comprises a connecting plate.

In Fig. 1, the ultrasonic arrangement 130 is arranged above the barrel 110, directed in a vertical direction downwards, towards the barrel 110. The ultrasonic arrangement 130 in Fig. 1 is arranged such that the ultrasonic horn 132 extends through an aperture 111‴ in the barrel 110. As such, the material in the bore may be exposed to ultrasonic radiation emitted from the ultrasonic horn 132. The ultrasonic horn 132 rests in the mounting means 133 which is arranged in the aperture 111‴, between the barrel 110 and the ultrasonic horn 132. The ultrasonic radiation emitted from the ultrasonic horn 132 is generated by the ultrasonic transducer 131. Specifically, the ultrasonic transducer 131 converts electrical energy into acoustic energy. An ultrasonic transducer may also be referred to as an ultrasonic converter. According to Fig. 1, the ultrasonic arrangement 130 is arranged at a position between the first end and the second end of the barrel 110, that is, the ultrasonic arrangement 130 is not arranged at an end section of the barrel 110. In a preferred example, the ultrasonic arrangement 130 is arranged at a position corresponding to where dispersive mixing takes place in the barrel 110.

A barrel section 111 comprising the ultrasonic arrangement 130 will now be described with reference to Fig. 2 and Fig. 3. It will be understood that the ultrasonic arrangement 130 may alternatively be arranged in connection to an integral barrel which does not comprise a plurality of barrel sections 111, in which case the integral barrel may be viewed as one barrel section 111.

In Fig. 2, there is displayed an exploded view of a barrel section 111 comprising the ultrasonic arrangement 130 according to the disclosure. The barrel section 111 comprises a body 111' portion, defining a mantle surface of the barrel section 111, and two side wall 111"s. The sidewalls are arranged to connect the barrel section 111 to adjacent barrel sections 111, or to equipment, such as die equipment. The bore extends though the barrel section 111 and is in Fig. 2 designed to receive a twin screw. The body 111' portion comprises the aperture 111‴ for receiving the ultrasonic arrangement 130. In Fig. 2, the aperture 111‴ is a circular hole, having a threaded inner wall, for connecting to a threaded outer surface of the mounting means 133.

Turning now to Fig. 3, displaying a cross-section of the mounting means 133 and the ultrasonic horn 132.

The mounting means 133 comprises an upper portion 133' (displayed as an essentially square plate in Fig. 2) wherein the upper portion 133' is arranged to rest on, and possibly be attached to, the barrel section 111. The mounting means 133 is arranged to guide the ultrasonic horn 132 such that it may extend into the bore. The mounting means 133 is furthermore arranged to support the ultrasonic horn 132 such that it may rest stably in the bore. To this end, the mounting means 133 comprises a receiving pocket in the form of a through hole, extending through the mounting means 133. The shape of the receiving pocket is preferably adapted to the shape of the ultrasonic horn 132. The mounting means 133 further comprises a bottom portion 133" arranged to be inserted into the aperture 111‴ of the barrel section 111. The bottom portion 133" displayed in Fig. 3 has a shape comprising two concave recesses. Each of the two concave recesses are designed to have essentially the same radius as an inside surface of the bore, which, as described above, has the shape of two overlapping cylinders. In other words, the bottom portion 133" is designed to be arranged flush with the inside surface of the bore when mounted therein. In an alternative embodiment, in which the compounding screw 120 is a single compounding screw, and the bore has the shape of one cylinder, the bottom portion 133" of the mounting means 133 has the shape of one concave recess. In one embodiment, the bottom portion 133" is threaded in order to connect to a threaded inner wall of the aperture 111‴.

In an alternative embodiment, the mounting means 133 is formed integral with the barrel section 111.

The ultrasonic horn 132 can generally be described as a piece of solid metal, arranged to transfer and possibly augment ultrasonic wave energy from the ultrasonic transducer 131 to, in the context of this disclosure, the material in the barrel 110. The ultrasonic horn 132 has an input end 132' and an output end. The input end 132' is connected to the ultrasonic transducer 131 and receives ultrasonic wave energy therefrom. The output end emits ultrasonic wave energy, specifically from an ultrasound emitting tip 132" of the output end.

According to Fig. 3, the geometry of the ultrasonic horn 132 is that of a rectangular cuboid (further visible in Fig. 2) in which the output end comprises two concave recesses joined by a flat tip defining the ultrasound emitting tip 132", extending the length of the ultrasonic horn 132. The two concave recesses are designed to have essentially the same radius as an inside surface of the bore, which, as described above, has the shape of two overlapping cylinders. In other words, the output end is designed to be arranged flush with the inside surface of the bore. In Fig. 3 the inserted ultrasonic horn 132 is represented by a dashed line.

In an alternative embodiment, the geometry of the ultrasonic horn is that of a rectangular cuboid in which the output end comprises two flat, slanting surfaces recesses joined by a flat tip defining the ultrasound emitting tip, extending the length of the ultrasonic horn.

In one example, the ultrasonic horn 132 has a width of 2-100 mm. In one example the ultrasonic horn 132 has a height of 100-300 mm. In one example the ultrasonic horn 132 has a length of 1-200 mm.

In one example, a distance between the ultrasonic horn 132 and the material, said distance being defined as a distance between the tip 132" of the ultrasonic horn 132 and the compounding screw 120 is 0.5-50 mm. Specifically, when the compounding extruder 100 comprises a twin screw, the distance is defined as the distance between the tip 132" of the ultrasonic horn 132 and a theoretical point disposed on a centerline axis of the barrel, exactly between the two compounding screws of the twin screw.

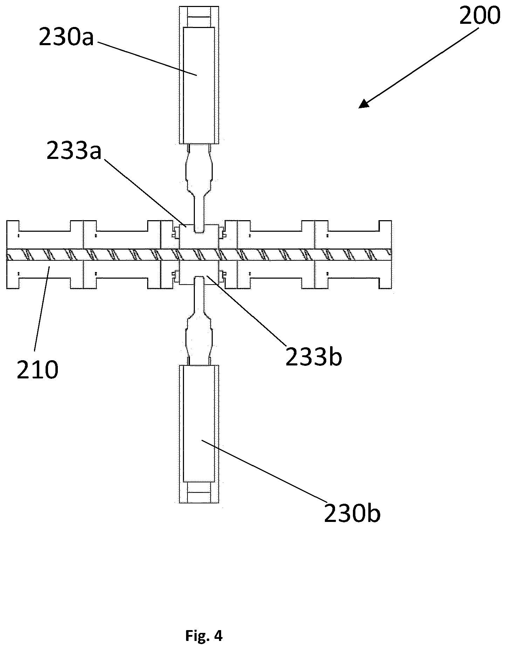

Fig. 4, Fig. 5 and Figs. 6a and 6b show a second embodiment of the compounding extruder 200 comprising two ultrasonic arrangements 230. If not stated otherwise, the compounding extruder 200 according to Fig. 4, Fig. 5 and Figs. 6a and 6b comprise corresponding features to the first embodiment of the compounding extruder 100 disclosed with reference to Figs. 1-3.

Fig. 4 displays a longitudinal section of the second embodiment of the compounding extruder 200. In Fig. 4 there is displayed a first ultrasonic arrangement 230a arranged above the barrel 210, directed in a vertical direction downwards, towards the barrel 210. A second ultrasonic arrangement 230b is arranged below the barrel 210, directed in a vertical direction upwards, towards the barrel 210. The first ultrasonic arrangement 230a and the second ultrasonic arrangement 230b are arranged such that their respective mounting means 233a, 233b and ultrasonic horns 232a,232b extend through a respective aperture in the barrel 210. In Fig. 4, the first ultrasonic arrangement and the second ultrasonic arrangement are arranged at different positions relative to a circumference of the barrel, but at the same lengthwise position, relative to a lengthwise extension of the barrel. Specifically, in Fig. 4, they are directed towards and mounted to the same barrel section 211.

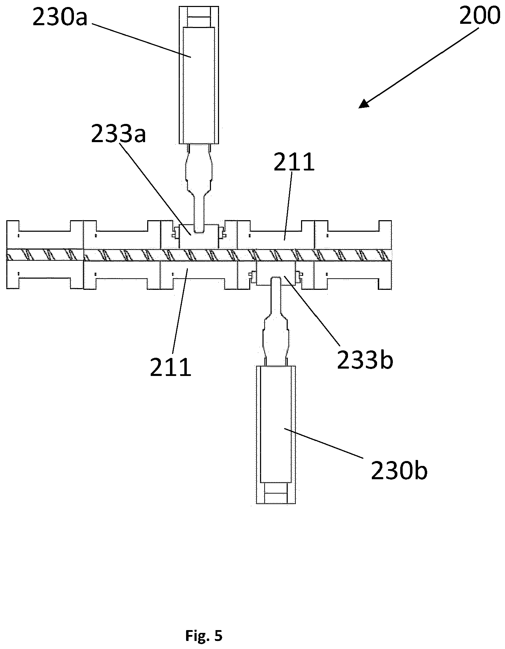

According to Fig. 5, first ultrasonic arrangement 230a and the second ultrasonic arrangement 230b are arranged at different lengthwise positions, relative a lengthwise extension of the barrel 210. Specifically, in Fig. 5, they are directed towards and mounted to different barrel sections 211.

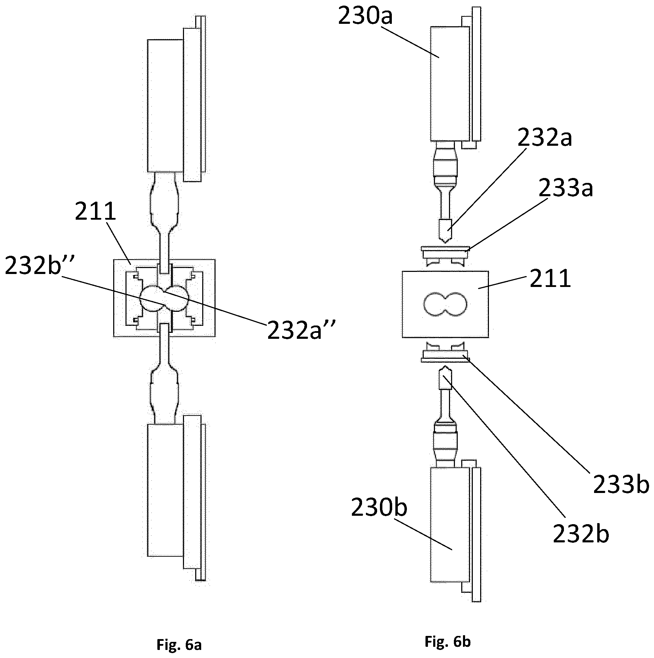

In Fig. 6a and Fig. 6b, there is displayed a cross-section and an exploded view, respectively, of a barrel section 211 of the compounding extruder according to the second embodiment.

The first mounting means 233a and the second mounting means 233b are displayed. The first mounting means 233a and the second mounting means 233b are arranged flush with the inside surface of the bore, when mounted in the barrel section 211. Furthermore, the first ultrasonic horn 232a and the second ultrasonic horn 232b are displayed. The first ultrasonic horn 232a and the second ultrasonic horn 232b are arranged flush with the inside surface of the bore 210.

In one example, a distance between a tip 232a" of the first ultrasonic horn 232a and a tip 232b" of the second ultrasonic horn 232b is 50-500 mm.

The method according to the disclosure will now be described.

According to the disclosure there is provided a method for dispersing organic particles in a polymer material to form a compound material. The method is executed utilizing a barrel section according to the disclosure mounted in a compounding extruder.

The method comprises feeding the organic particles and polymer material into the compounding extruder. Compounding in a compounding extruder is a continuous process and as such, feeding materials into the compounding extruder is performed continuously. The organic particles and polymer material may be fed through the same, or through different inlets.

The method further comprises feeding the material though the barrel by means of the compounding screw. The compounding screw furthermore provides mechanical kneading of the material. The distributive mixing phase is the first part of the compounding extruder. In the distributive mixing phase, the polymer melts by external heating and/or the heat generated by the mechanical kneading. When the polymer melts, it is furthermore roughly mixed with the particle material. The dispersive mixing phase is the second part of the compounding extruder.

The method comprises exposing the polymer and the organic particle to ultrasonic radiation during mixing in the compounding extruder, to further disperse the organic particle in the polymer matrix. Preferably, the material is exposed to ultrasonic radiation in the distributive mixing phase.

In one example, the temperature in the barrel is ≤ 400 °C, preferably ≤ 250 °C, more preferably ≤ 200 °C, even more preferably 120-180 °C. Preferably, the above temperatures relate to a temperature at the position in the barrel where the material is exposed to ultrasonic radiation. In one example, the temperature of the polymer does not exceed 400° C at any position in the barrel.

In one example, the pressure in the barrel is 30-50 bar. Preferably, the pressure at the position in the barrel where the material is exposed to ultrasonic radiation is 30-50 bar.

In one example, the intensity of the ultrasonic wave energy is 25-1200 W/cm². The intensity is defined as the energy per unit time which passes through a unit cross-sectional area being perpendicular to the ultrasonic wave propagation.

In one example, the power output of the ultrasonic arrangement is 600-1500 W. The power is the total energy passing over the whole cross-sectional area of the beam per unit time. If the intensity is uniform over the plane of interest, then the power equals the intensity times the area of interest.

Preferred embodiments of a method, a barrel section and a compounding extruder have been disclosed above. However, a person skilled in the art realises that this can be varied within the scope of the appended claims without departing from the inventive idea.

All the described alternative embodiments above or parts of an embodiment can be freely combined or employed separately from each other without departing from the inventive idea as long as the combination is not contradictory.

## Claims

1. A method for dispersing organic particles in a polymer material, the method being part of a process for producing a composite material, the method comprising:
receiving the organic particles and the polymer material in a compounding extruder,
exposing the organic particles and the polymer material in the compounding extruder to ultrasonic radiation to disperse the organic particles in the polymer material.

2. The method according to claim 1, wherein the ultrasonic radiation has a frequency within the interval 20-200000 kHz.

3. The method according to claim 1 or 2, wherein the ultrasonic radiation has an amplitude in the interval 0.1-200 µm.

4. The method according to any one of the preceding claims, wherein the temperature of the organic particles and polymer material during exposure to ultrasonic radiation is ≤ 400° C.

5. The method according to any one of the preceding claims, wherein the organic particles are organic fibers.

6. The method according to claim 5, wherein an average fiber length of the organic fibers is 5 - 8000 microns, preferably 50-2000 microns.

7. The method according to claim 5 or 6, wherein an average fiber diameter of the organic fibers is ≥10 microns.

8. A barrel section, arranged as a part of a barrel of a compounding extruder, the barrel section comprising an aperture in a mantle surface thereof,
wherein the barrel section comprises an ultrasonic arrangement comprising:
an ultrasonic transducer,
an ultrasonic horn, and
means for mounting the ultrasonic arrangement to the barrel section such that at least a part of the ultrasonic horn extends through the aperture.

9. The barrel section according to claim 8, wherein a shape of an output end of the ultrasonic horn comprises at least one concave recess.

10. The barrel section according to any one of claims 8-9, further comprising means for cooling the ultrasonic horn.

11. The barrel section according to any one of claims 8-10, comprising two ultrasonic arrangements, arranged in different positions relative to a circumference of the barrel section.

12. The barrel section according to any one of claims 8-10, comprising two ultrasonic arrangements, arranged in different positions relative to a lengthwise extension of the barrel section.

13. The barrel section according to any one of the claims 8-12, wherein the barrel section is arranged to receive a twin compounding screw.

14. A compounding extruder comprising:
a barrel,
a compounding screw,
an inlet for a polymer material,
an inlet for organic particles, and
an outlet for a composite material comprising the organic particles dispersed in the polymer material,
wherein the barrel comprises a barrel section according to any one of the preceding claims 8-13.

15. The compounding extruder according to claim 14, wherein the compounding screw is a twin compounding screw.
